(19) Europäisches Patentamt
European Patent Office
Office européen des brevets

(11) **EP 1 744 201 A1**

(12) **EUROPEAN PATENT APPLICATION**
published in accordance with Art. 158(3) EPC

(43) Date of publication:
**17.01.2007 Bulletin 2007/03**

(21) Application number: **04738354.2**

(22) Date of filing: **06.07.2004**

(51) Int Cl.:
*G02C 7/00* (2006.01)  *A61F 9/00* (2006.01)

(86) International application number:
**PCT/CN2004/000756**

(87) International publication number:
**WO 2005/003841 (13.01.2005 Gazette 2005/02)**

(84) Designated Contracting States:
**AT BE BG CH CY CZ DE DK EE ES FI FR GB GR HU IE IT LI LU MC NL PL PT RO SE SI SK TR**

(30) Priority: **08.07.2003  CN 03127614**

(71) Applicant: **Chen, Mou**
**Changchun,**
**Jilin 130012 (CN)**

(72) Inventors:
• **CHEN, Mou**
  **Changchun,**
  **Jilin 130012 (CN)**
• **CHEN, Xiaoguang**
  **Changchun,**
  **Jilin 130012 (CN)**

(74) Representative: **Coppo, Alessandro et al**
**Ing. Barzanò & Zanardo Milano S.p.A.,**
**Via Borgonuovo, 10**
**20121 Milano (IT)**

(54) **SPECTACLES FOR CORRECTING COLOR BLINDNESS**

(57)  Color blindness rectification spectacles, based on color blindness rectification principle and the physiological and psychological functions of human eyes for maximizing, emulation, blending and integration, fabricating the color blindness rectification spectacles by mounting a glass for rectifying the proportionment of the primary colors to normal status at one side of the spectacles frame, and mounting a glass for improving the luminosity of chromatic vision to normal status at the other side of the spectacles frame, such that the vectors of the three primary colors received by the cerebral cortex of a patient with color blindness tend to be normal, so that the objective of rectifying color blindness is achieved. The method is scientific and reliable.

Fig. 1

**Description**

Technical Field:

This invention is in the technical field of color blindness rectification, especially, the invention relates to color blindness rectification spectacles and method of fabricating the same.

Background Art

There are over 200 million people with color blindness. They are unable to identify colors, and cannot feel the beauty of the world. They are deprived of rights of working in fields such as art, printing, chemical industry, transportation, geology and military. So, color blindness rectification spectacles were invented, such as the color blindness rectification spectacles and color blindness rectification method in patent ZL90110297.0, color blindness rectification spectacles in US Patent 5369453, color blindness rectification spectacles in Japanese patent 2813743. The light transmittance of all these patented products is below 35%. Although they can normalize the proportionment of primary colors for people with color blindness, the luminosity is reduced significantly. They cannot only achieve normal chromatic vision, their eyesight is impaired when it is not lightened enough. Further, the patented product of ZL98201888.6 is a kind of monocular color blindness rectification spectacle, which would certainly cause difference in color, and affect the eyesight and color blindness rectification.

Summary of the invention

The technical problem to be solved by this invention is to provide color blindness rectification Spectacles that can provide normal primary colors, hue, saturation and luminosity and the method for the same.

The technical solution of this invention is embodied in the following way: one side of the spectacles frame is mounted with a lens for rectifying the proportionment of the primary colors to normal status, the other side of the spectacles frame is mounted with a lens for improving the chromatic vision to normal status. Lens for rectifying the proportionment of the primary colors to normal status is fabricated according to the types and levels of color blindness by selecting those having corresponding rectifying spectral curves; lens for improving the luminosity of chromatic vision to normal status is selected for rectification by different levels determined by the improvement of 500-600nm light transmittance.

The method for fabricating lens for rectifying the proportionment of the three primary colors is: determining the type, level and spectral curves for rectifying color blindness with a chromatic vision detector, then coloring the substrate, designing the film system according to the spectral curves, and putting the substrate into a vacuum deposition machine to conduct coating according to the predetermined film system design procedures, and conducting chromeplating to the last layer. The method for fabricating lens for improving the luminosity is: normalizing the luminosity with a chromatic vision detector without changing the rectified primary color proportionment, further determining the rectifying spectral curves of the lens, then coloring the substrate with a color same as that of the lens for rectifying proportionment of primary colors, designing the film system according to the selected spectral curves, and putting the substrate into a vacuum deposition machine to conduct coating according to the designed film system procedure, and conducting chromeplating to the last layer; mounting the above two kinds of lenses into a spectacles frame regardless of right or left, such that the color blindness rectification spectacles is made.

The benefit of this invention is: based on human color blindness rectification principle and the physiological and psychological functions of human eyes for maximizing, emulation, blending and integration, fabricating color blindness rectification spectacles that enables the user to have normal primary colors, tone, saturation and luminosity after wearing, so that the objective of rectifying color blindness is achieved.

According to the theory of human chromatic vision, after outer light enters the eye, it decompounds into three primary colors at the keratose layer of the retina, red (R), green (G) and blue (B), and they are reflected onto the three kinds of visual cone cells respectively sensational to red, green and blue, generating light stimulating values R, G and B. After matrix transformation on retina level, these values are modulated into brightness signal L and chromatic difference signals U and V, and

$$L = L_R R + L_G G + L_B B$$

$$U = K_U (R - L)$$

$$V = K_V (B-L)$$

wherein $L_R$, $L_G$ and $L_B$ are brightness coefficients, and $L_R+L_G+L_B=1$. U is red chromatic difference signal, $V_R$ is blue chromatic difference signal, $K_U$ and $K_V$ are weighting coefficients. The above L, U and V signals are transferred to corresponding cell levels at the lateral geniculate body through three kinds of optic nerve fibers of different sizes by the optic chiasma. In there, the L, U and V are decoded and re-modulated into three primary colors, and

$$R = U/K_U + L$$

$$G = L - (L_R/L_G)(U/K_U) - (L_G/L_{\dot B})(V/K_V)$$

$$B = V/K_V + L$$

The above R, G and B are transferred to Region 17 of the cerebral cortex through visual radiation, the cerebral cortex defines colors and feels chromatic vision according to inherent color coordinate systems based on vectors of the three primary colors, as well as direction and magnitude of $\vec{R} + \vec{G} + \vec{B}$. No matter at which level of human chromatic vision process aberrance occurs, the result would be that the visual region of the cerebral cortex receives abnormal values of three primary colors, but the cerebral cortex still generates chromatic vision according to inherent color definitions, and this will certainly result in abnormal chromatic vision, the so-called colorblindness. When all the three visual cone cells on the retina lost their functions or the cerebral cortex is unable to receive the three primary color signals, the patient has no sense of colors, and this kind of color blindness is called achromatopsia (total color blindness); when two of the three visual cone cells on the retina have weak performance or two of the three primary color signal values received by the cerebral cortex are weak, one of the red, green or blue in the patient's eyes would be brighter, this would be defined as $A_R$, $A_G$ or $A_B$ type color blindness; when one of the three visual cone cells on the retina has weak performance or one of the three primary color signal values received by the cerebral cortex is weak, one of the red, green or blue in the patient's eyes would be darker, and it would be defined as $B_R$, $B_G$ or $B_B$ type color blindness. Except achromatopsia, the chromatic vision of all the 6 types of color blindness can be improved by just changing the proportion of the three primary colors incidence from outside into the human eyes, such that the proportionment of the three primary colors received by the cerebral cortex tends to be normal.

The rectification theory of this invention is explained as follows:

Assuming the light stimulation values of three primary colors of normal chromatic vision generated on the retina as R, G and B, the modulated brightness is L, chromatic differences are U and V. At the lateral geniculate body, the three primary color signals are re-modulated and transferred to the visual region of the cerebral cortex, and

$$\vec{R} = R, \vec{G} = G, \vec{B} = B$$ . The brain generates chromatic vision

$$\vec{F}(\lambda) = \vec{R} + \vec{G} + \vec{B} = \sqrt{R^2 + G^2 + B^2}$$ . Letting the light stimulation values of three primary colors of a patient with color blindness are r, g and b, the generated brightness is 1, chromatic differences are u and v; the light transmittances of the three primary colors on the spectral curves of two color blindness rectification glasses are respectively $\bar{r}$, $\bar{g}$, $\bar{b}$ and $\bar{r'}$, $\bar{g'}$, $\bar{b'}$. If one eye wears a glass that makes the proportionment of the three primary colors normal, then a brightness signal 1, chromatic differences u and v are generated, and

$$\bar{1} = L_r \bar{r} \cdot r + L_g \bar{g} \cdot g + L_b \bar{b} \cdot b \qquad (1)$$

$$\overline{u}=K_u\ (\ \overline{r}\cdot r -\ \overline{l}\ )\qquad\qquad(2)$$

$$\overline{v}=K_v\ (\ \overline{b}\cdot b -\ \overline{l}\ )\qquad\qquad(3)$$

If another eye wears a glass that maintains the luminosity to be normal, then a brightness signals $\overline{l}'$ and chromatic difference signals $\overline{u}'$ and $\overline{v}'$ are generated, and

$$\overline{l}'=L_{r'}\overline{r'}\cdot r + L_{g'}\overline{g'}\cdot g + L_{b'}\overline{b'}\cdot b\qquad\qquad(4)$$

$$\overline{u}'=K_{u'}\ (\ \overline{r'}\cdot r -\ \overline{l}'\ )\qquad\qquad(5)$$

$$\overline{v}'=K_{v'}\ (\ \overline{b'}\cdot b -\ \overline{l}'\ )\qquad\qquad(6)$$

The lateral geniculate body conducts according to (4), (2) and (3), that is, from

$$\overline{l}'=L_r\overline{r'}\cdot r + L_g\overline{g'}\cdot g + L_b\overline{b'}\cdot b\qquad\qquad(4)$$

$$\overline{u}=K_u\ (\ \overline{r}\cdot r -\ \overline{l}\ )\qquad\qquad(2)$$

$$\overline{v}=K_v\ (\ \overline{b}\cdot b -\ \overline{l}\ )\qquad\qquad(3)$$

Letting $\dfrac{\overline{l}'}{l}\overline{u}=\overline{U}$ 、 $\dfrac{\overline{l}'}{l}\overline{v}=\overline{V}$ 、 $\dfrac{\overline{l}'}{l}\overline{r}r=\overline{R}$ 、 $\dfrac{\overline{l}'}{l}\overline{b}b=\overline{B}$ , the (2) and (3) are transformed into

$$\overline{U}=K_u(\overline{R}-\overline{l}')\qquad\qquad(2')$$

$$\overline{V}=K_v(\overline{B}-\overline{l})\qquad\qquad(3')$$

It is modulated from (4), (2') and (3')

$$\overline{R}=\overline{U}/K_U+\overline{l}'\qquad\qquad(7)$$

$$\overline{G} = \overline{I'} - (L_R/L_G)(\overline{U}/K_U) - (L_b/L_g)(\overline{V}/K_V) \qquad (8)$$

$$\overline{B} = \overline{V}/K_v + \overline{I'} \qquad (9)$$

When $\overline{I'} \to L$, there must be $\overline{R} \to R$, $\overline{G} \to G$, $\overline{B} \to B$, that means the brain visual system

$$\vec{F}(\lambda) = \vec{R} + \vec{G} + \vec{B} \approx \sqrt{\overline{R^2} + \overline{G^2} + \overline{B^2}}$$ rectifies the chromatic vision to normal.

Description of drawings:

Fig. 1 illustrates the spectral curves of the rectification glass for $A_{G6}$ type color blindness according to one embodiment of the invention.
Fig. 2 illustrates the spectral curves of the rectification glass for $A_{RG5}$ type color blindness according to the embodiment of the invention.

Mode for carrying out the invention:

Example

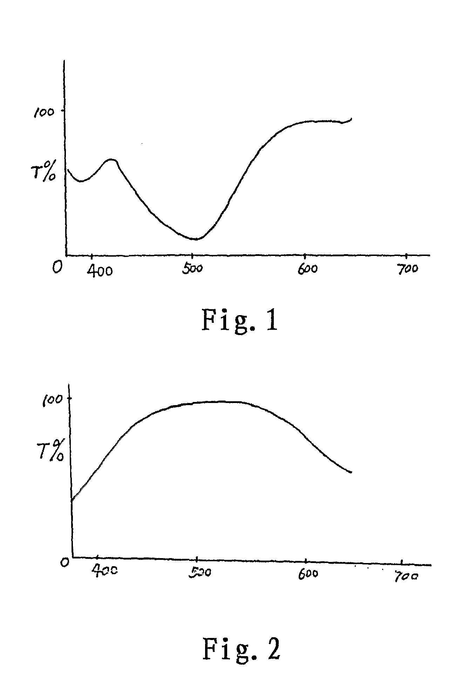

Because color blindness has 6 types each having 6 levels, the same method can be adopted by drawing inferences about other cases from one example. As one example, if a patient with color blindness is determined to be $A_G$ type Level 6 by using a chromatic vision detector, the rectification step may be as follows:
With reference to Fig. 1 and 2, Fig. 1 is the spectral curves of the rectification glass for $A_{G6}$ color blindness, while Fig. 2 is the spectral curves of the rectification glass for $A_{RG5}$ color blindness. During fabrication, the first step is coloring a selected optical glass serving as base color glass, then designing the film system according to the $A_{G6}$ spectral curves, conducting coating on the concave side in a vacuum deposition machine, and conducting chromeplating for the last layer so as to prevent the light from irradiating into the eyes and affect eyesight. Producing $A_{RG5}$ glasses with the same procedure; selecting the $A_{G6}$ glass involving corresponding rectification spectral curves, which can make the proportionment of the three primary colors tend to be normal, and mounting into one of the spectacles frames, then selecting the $A_{RG5}$ rectification glass which improve the luminosity into another spectacles frame; asking the patient wearing the rectification spectacles with two sides of the spectacles frame respectively mounted with rectification glasses for $A_{G6}$ and $A_{RG5}$ to conduct double eye color blindness rectification test for reaching standard:

1. Conducting test on number of luminosity level through the screen of a chromatic vision detector, on which both the upper and lower semicircle patterns are in brightest red. First, decrease the brightness of the lower semicircle, when the luminosity of the lower semicircle is different from that of the upper one, decrease the brightness of the upper semicircle, when the red brightness of the upper semicircle pattern is different from that of the lower one, again decrease the brightness of the lower semicircle, and go on in the same way. Thus the level number of luminosity can be determined. In the same method, conducting test on the luminosity level for green and blue color. When the number of luminosity levels are same as normal people, it is proved that the rectified luminosity of the three primary colors is same as normal people.
2. Conducting test on white balance and proportionment of tones with a chromatic vision detector.
Necessary and sufficient condition for white balance is that the stimulation values of the three primary colors on the retina are equal, which means R=G=B, when the brightness reaches maximum, the two chromatic difference signals modulated by the retina are U=0, and V=0, the three primary colors decoded by the lateral geniculate body are R=L, G=L, and B=L, the cerebral cortex will define as white color upon receiving. When the rectified $\vec{R} = \vec{G} = \vec{B}$,

and the brightness reaches normal, the two chromatic difference signals modulated by the retina are $\vec{U} = 0$ and

$\vec{V} = 0$. It is decoded by the lateral geniculate body that $\vec{R} = \vec{G} = \vec{B}$ and $\vec{R} = \overline{L'}$ 、 $\vec{G} = \overline{L'}$ 、

$\vec{B} = \overline{L'}$ . When $\overline{L'}$ = L, the white color in the rectified patient's eyes is tending into normal white. The test method is: the upper semicircle on the screen is arranged into normally proportioned white color, asking the patient using R+G+B on the lower semicircle pattern to match proportion as same as the white color of the upper semicircle pattern. When the white color is same and the proportion is same, the standard for rectification is met. Similarly, the test on proportion of hue can be conducted.

3. Finally, asking patient to undergo test with, for instance, 24 chromatic vision examination charts.

If all the above examinations are passed, color blindness rectification spectacles can be assembled according to the prescription for the spectacles. The patient's chromatic vision tends to be normal after wearing the spectacles.

## Claims

1. Color blindness rectification spectacles, **characterized in that**, based on color blindness rectification principle and the physiological and psychological functions of human eyes for maximizing, emulation, blending and integration, fabricating the color blindness rectification spectacles by mounting a glass for rectifying the proportionment of the primary colors to normal status at one side of the spectacles frame, and mounting a glass for improving the luminosity of chromatic vision to normal status at the other side of the spectacles frame.

2. The color blindness rectification Spectacles according to Claim 1, **characterized in that**, the glass for rectifying the proportionment of the primary colors to normal status is fabricated by selecting corresponding rectifying spectral curves according to the types and levels of color blindness.

3. The color blindness rectification Spectacles according to Claim 1, **characterized in that**, the glass for improving the luminosity of chromatic vision to normal status is selected for rectification by different levels determined by the improvement of every 500-600nm light transmittance.

4. A method of fabricating color blindness rectification spectacles in Claim 1, **characterized in that**,
   the rectifying glass for three primary colors are fabricated by: firstly determining the type, level and spectral curves for rectifying color blindness with a chromatic vision detector; coloring a base glass, designing the film system according to the spectral curves; putting the base glass into a vacuum deposition machine to conduct coating according to the film system design; and conducting chromeplating for the last layer,
   similarly steps are used for the glass for improving chromatic luminosity: determining the rectifying spectral curves for the glass with a chromatic vision detector which normalizes the luminosity without changing the proportionment of the rectified three primary colors; then coloring a same base glass as that for three primary colors with the same colors, designing the film system according to the selected spectral curves; putting the base glass into a vacuum deposition machine to conduct coating according to the film system design; and conducting chromeplating for the last layer,
   mounting the above two kinds of glasses into a spectacles frame regardless of left and right, and the color blindness rectification fabricated.

Fig. 1

Fig. 2

# INTERNATIONAL SEARCH REPORT

International application No.

PCT/CN2004/000756

A. CLASSIFICATION OF SUBJECT MATTER

IPC$^7$ G02C7/00, A61F9/00

According to International Patent Classification (IPC) or to both national classification and IPC

B. FIELDS SEARCHED

Minimum documentation searched (classification system followed by classification symbols)

IPC$^7$ A61F9, G02C7, A61B3

Documentation searched other than minimum documentation to the extent that such documents are included in the fields searched

Chinese Patent

Electronic data base consulted during the international search (name of data base and, where practicable, search terms used)

CNPAT WPI EPODOC PAJ

C. DOCUMENTS CONSIDERED TO BE RELEVANT

| Category* | Citation of document, with indication, where appropriate, of the relevant passages | Relevant to claim No. |
|---|---|---|
| A | CN1236902A(KELI ER OPTICAL PRODUCTS CO LT)01.Dec.1999 (01.12.1991) whole document | 1-4 |
| A | CN1227927A（CHEN,Mou）08.Sep.1999 (08.09.1999) whole document | 1-4 |
| A | CN1365654A (CHANGCHUN INST OF OPTICAL FINE)28.Aug .2002(28.08.2002) whole document | 1-4 |
| A | CN1062832A(CHEN,Xiaoguang)22.Jul.1992 (22.07.1992) whole document | 1-4 |
| A | US5369453A(Xiaoguang Chen) 29.Nov.1994(29.11.1994) whole document | 1-4 |
| A | US4300819A(Donald E.Taylor)17.Nov.1981(17.11.1981) whole document | 1-4 |
| A | US5917573A(James Kenneth Davis) 29.Jun.1999(29.06.1999) whole document | 1-4 |
| A | DE19804703A1(GOETZFRIED ARTHUR et al) 21.Oct.1999(21.10.1999) whole document | 1-4 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27.Jul.2004 (27.07.2004) | 0 2 · AUG 2004 (0 2 · 0 8 · 2 0 0 4) |
| Name and mailing address of the ISA/<br>6 Xitucheng Rd., Jimen Bridge, Haidian District,<br>100088 Beijing, China<br>Facsimile No. 86-10-62019451 | Authorized officer<br><br>ZHANG,Xiao<br><br>Telephone No. (86-10) 62085812 |

Form PCT/ISA /210 (second sheet) (January 2004)

8

**INTERNATIONAL SEARCH REPORT**
Information on patent family members

国际申请号

PCT/CN2004/000756

| Patent document cited in search report | Publication date | Patent family Members | Publication Date |
|---|---|---|---|
| CN1236902A | 1999-12-01 | EP0977072A | 2000-02-02 |
| | | JP2000047145A | 2000-02-18 |
| | | US6142626A | 2000-11-07 |
| CN1227927A | 1999-09-08 | WO9945424A | 1999-09-10 |
| | | AU2608499A | 1999-09-20 |
| CN1365654A | 2002-08-28 | None | |
| CN1062832A | 1992-07-22 | JP6018819A | 1994-01-28 |
| US5369453A | 1994-11-29 | None | |
| US4300819A | 1981-11-17 | None | |
| US5917573A | 1999-06-29 | None | |

PCT/ISA/210 表(同族专利附件)(2004 年 1 月)

9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5369453 A
- JP 2813743 B